# EUROPÄISCHE PATENTSCHRIFT

(11) **EP 2 726 222 B1**
(45) Veröffentlichungstag und Bekanntmachung des Hinweises auf die Patenterteilung: **08.07.2015**
(21) Anmeldenummer: 12720521.9
(22) Anmeldetag: 15.05.2012
(51) Int. Cl.: B07C 5/36, B65G 47/84

(54) **VORRICHTUNG ZUM AUSSCHEIDEN VON AUSSCHUSSGÜTERN**
APPARATUS FOR ELIMINATING REJECT GOODS
DISPOSITIF DESTINÉ À LA SÉPARATION DE BIENS NON-CONFORMES

(30) Priorität: 29.06.2011 DE 102011078269
(43) Veröffentlichungstag der Anmeldung: 07.05.2014
(73) Patentinhaber: Robert Bosch GmbH, 70442 Stuttgart (DE)
(72) Erfinder: MUELLER, Frank, 73479 Ellwangen (DE); WACKER, Christian, 74585 Rot am See (DE); HAAG, Manuel, 91625 Schnelldorf/Haundorf (DE); ZIEGLER, Otto, 74585 Rot Am See (DE)
(86) Internationale Anmeldenummer: PCT/EP2012/058995
(87) Internationale Veröffentlichungsnummer: WO 2013/000620

(56) Entgegenhaltungen:
- DE-B- 1 084 640

## Beschreibung

### Stand der Technik

Die vorliegende Erfindung betrifft eine Vorrichtung zum Ausscheiden von Ausschussgütern in einer Transportstrecke, insbesondere bei gefüllten Behältnissen im pharmazeutischen Bereich.

Transportvorrichtungen werden beispielsweise in automatisierten Förder- und Füllanlagen verwendet, wobei zum Transport häufig Transportsterne verwendet werden, um Güter zu fördern. Im medizinischen Bereich werden beispielsweise Vials, Ampullen, Fläschchen, usw., transportiert. Hierbei muss insbesondere sichergestellt werden, dass beschädigte bzw. nicht vollständig gefüllte Behältnisse (Ausschussgüter) nicht weitertransportiert, sondern ausgeschieden werden. Im Stand der Technik ist es dabei bekannt, Vakuumvorrichtungen an Transportsternen vorzusehen, welche nach einer Überprüfung, ob ein fehlerfreies Gut oder ein Ausschussgut vorliegt, das Ausschussgut anzusaugen und in einen Schlechtauslauf zuzuführen. Aufgrund der Verwendung eines Vakuums bzw. Unterdrucks treten jedoch bei dieser Technik verschiedene Probleme auf. Wegen unterschiedlichen Objekttoleranzen bzw. Objektoberflächen ist ein richtiges Anliegen der Saugerlippe am Behältnis nicht immer sicher gewährleistet. Ferner können Vakuumkraftverluste aufgrund von langen Leitungen entstehen. Auch können unerwünschte Luftverwirbelungen entstehen, welche insbesondere bei Anwendungen in isolierten Räumen (Isolatoranlagen) Störungen hervorrufen können. Ferner müssen bei Isolatoranwendungen die Vakuumleitungen dekontaminiert werden. Weiterhin ist aus der DE 10 2009 000 496 A1 eine Transportvorrichtung bekannt, bei der ein Ausschubfinger an einem Transportstern vorgesehen ist, um Ausschussgüter radial zum Transportstern auszuschieben. Diese Vorrichtung ist jedoch nur bis zu bestimmten Durchmesserbereichen der Behältnisse möglich. Ferner ist eine Rotationsgeschwindigkeit des Transportsterns dieser Vorrichtung begrenzt. Ferner ist nur eine Ausweisung vornehmlich in einen Ausschusskanal und nicht die Übergabe z.B. in einen weiteren Transportstern möglich.

Aus der DE-A-1 084 640 ist bereits eine Vorrichtung zum Ausscheiden von Gütern mit Transportsternen bekannt. Hierbei werden von einem ersten Förderer angelieferte Behälter auf zwei Weiterförderer aufgeteilt.

### Offenbarung der Erfindung

Die erfindungsgemäße Vorrichtung zum Ausscheiden von Ausschussgütern mit den Merkmalen des Anspruchs 1 weist demgegenüber den Vorteil auf, dass kein Vakuum notwendig ist und somit die Nachteile der Vakuum-Ausscheidevorrichtungen entfallen können. Darüber hinaus kann die erfindungsgemäße Vorrichtung eine hohe Durchlaufgeschwindigkeit aufweisen, ohne dass dadurch Güter fälschlich in den Gutauslauf bzw. Schlechtauslauf geleitet werden. Dabei ist die erfindungsgemäße Vorrichtung insbesondere auch im pharmazeutischen Bereich bei zerbrechlichen Behältnissen wie beispielsweise Glasbehältnissen, problemlos einsetzbar. Dies wird erfindungsgemäß dadurch erreicht, dass die Vorrichtung einen ersten und einen zweiten Transportstern sowie eine erste und eine zweite Stelleinrichtung aufweist. Jedem Transportstern ist dabei eine Stelleinrichtung zugeordnet. Die Stelleinrichtungen werden mittels einer Steuereinheit angesteuert, die basierend auf Ergebnissen einer Überwachungsvorrichtung die Stelleinrichtungen ansteuern, um fehlerfrei Güter in den Gutauslauf und fehlerbehaftete Güter in den Schlechtauslauf zu leiten. Zwar ergibt sich erfindungsgemäß durch die Verwendung von Stelleinrichtungen ein baulich etwas erhöhter Aufwand, allerdings kann durch zwei Stelleinrichtungen ein gleichmäßiges und laufruhiges Ausscheiden von Ausschussgütern sichergestellt werden. Insbesondere kann ein Sortieren der Güter in fehlerfreie und fehlerbehaftete Güter ohne Geschwindigkeitsreduzierung der Drehgeschwindigkeit der Transportsterne erfolgen.

Die Unteransprüche zeigen bevorzugte Weiterbildungen der Erfindung.

Vorzugsweise umfasst jede der Stelleinrichtungen einen Hebel, wobei jeder Hebel eine Bewegung auf einer Kreisbahn und eine Drehung um eine Drehachse ausführt. Hierdurch kann der Hebel eine kombinierte Dreh- und Schwenkbewegung auf einer Linie ausführen.

Besonders bevorzugt weisen die erste und zweite Stelleinrichtung ein Getriebe auf. Das Getriebe ist vorzugsweise zwischen einem Hebel und einem Antrieb angeordnet. Hierbei kann die Bewegung des Hebels mittels des Getriebes auf kleinem Bauraum ausgeführt werden und gleichzeitig eine Drehzahländerung einer Antriebsdrehzahl, insbesondere eine Drehzahluntersetzung, ausgeführt werden. Die Verwendung des Getriebes ermöglicht ferner eine einfache Anpassung der Stelleinrichtungen an Behältnisse mit unterschiedlichen Größen, insbesondere unterschiedlichen Durchmessern, indem die Hebel zu unterschiedlichen Zeitpunkten unterschiedlich lange bewegt werden, und entsprechend weniger oder mehr von einer Ausgangsposition vorstehen.

Das Getriebe umfasst vorzugsweise insgesamt drei Zahnräder, wobei ein erstes Zahnrad mit dem Antrieb verbunden ist, ein zweites Zahnrad mit dem ersten Zahnrad kämmt, und ein drittes Zahnrad mit dem zweiten Zahnrad kämmt, um eine Drehbewegung des Hebels auszuführen. Das zweite und dritte Zahnrad laufen dabei um das erste Zahnrad um. Eine Schwenkbewegung des Hebels wird dabei über die um das erste Zahnrad umlaufenden zweiten und dritten Zahnräder bereitgestellt.

Weiter bevorzugt umfasst die Vorrichtung einen Keil, welcher zwischen dem Gutauslauf und dem Schlechtauslauf angeordnet ist und den Gutauslauf vom Schlechtauslauf trennt. Der Keil unterstützt dabei einen sanften und gleichmäßigen Übergang der Behältnisse in den jeweiligen Auslauf.

Für einen möglichst kompakten Aufbau weist vorzugsweise jede Stelleinrichtung einen eigenen Antrieb auf. Hierdurch können zwei gleich aufgebaute Stelleinrichtungen bereitgestellt werden, welche jeweils einen kleinen Bauraum einnehmen und kostengünstig hergestellt werden können. Ferner ist eine Steuerung der jeweiligen Stelleinrichtungen dadurch vereinfacht.

Weiter bevorzugt weisen der erste und der zweite Transportstern jeweils einen gleichen Durchmesser und/oder eine gleiche Teilung auf, wodurch der Aufbau der Vorrichtung weiter vereinfacht werden kann.

Gemäß einer weiteren bevorzugten Ausgestaltung der Erfindung ist die Steuereinheit derart eingerichtet, dass die erste und zweite Stelleinrichtung jeweils ihre eingenommene Stellung beibehalten, bis die Überwachungsvorrichtung ein Gut erfasst, welches eine andere Stellung der Stelleinrichtungen bedient. Mit anderen Worten, bleiben die beiden Stelleinrichtungen solange in der Position zum Übergeben der Güter in den Gutauslauf, bis ein Ausschussgut erfasst wird. Anschließend bleibt nun die Stelleinrichtung solange in der Ausschussstellung, bis wieder ein nächstes fehlerfreies Gut erfasst wird. Hierdurch können unnötige Umschaltzeiten vermieden werden.

Um gegebenenfalls eine Umrüstung auf unterschiedliche Güter mit unterschiedlichen Behältergrößen, insbesondere Behälterdurchmessern, zu ermöglichen, sind die Hebel vorzugsweise austauschbar angeordnet.

Vorzugsweise sind die Stelleinrichtungen unterhalb der Transportsterne angeordnet. Hierdurch ist insbesondere eine Sichtkontrolle der Vorrichtung von oben uneingeschränkt möglich.

Ferner betrifft die Erfindung eine Füllmaschine und/oder eine Verpackungsmaschine für pharmazeutische Güter mit einer erfindungsgemäßen Vorrichtung.

### Zeichnung

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische Draufsicht auf eine Vorrichtung zum Ausscheiden von Ausschussgütern gemäß einem Ausführungsbeispiel der Erfindung in einer ersten Stellung,
- Figur 2: eine schematische Draufsicht entsprechend Figur 1 in einer zweiten Stellung,
- Figur 3: eine schematische Seitenansicht der Vorrichtung von Figur 1,
- Figur 4: eine schematische Darstellung einer Stelleinrichtung der Vorrichtung von Figur 1, und
- Figur 5: eine schematische Darstellung eines Getriebes der Stelleinrichtung von Figur 4.

### Bevorzugte Ausführungsform der Erfindung

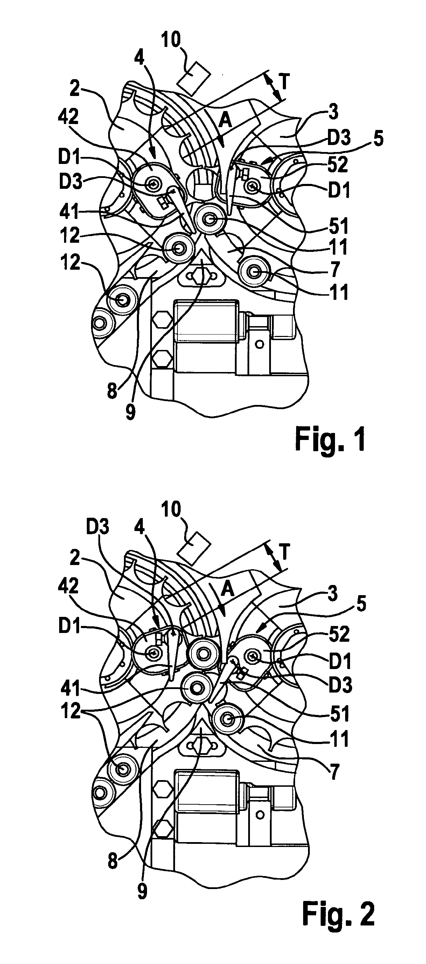

Nachfolgend wird unter Bezugnahme auf die Figuren 1 bis 5 eine Vorrichtung 1 zum Ausscheiden von Ausschussgütern im Detail beschrieben.

Wie insbesondere aus den Figuren 1 bis 3 ersichtlich ist, umfasst die erfindungsgemäße Vorrichtung 1 zum Ausscheiden von Ausschussgütern einen ersten Transportstern 2 und einen zweiten Transportstern 3. Weiterhin ist im ersten Transportstern 2 eine erste Stelleinrichtung 4 angeordnet und am zweiten Transportstern 3 eine zweite Stelleinrichtung 5 angeordnet. Die beiden Stelleinrichtungen 4, 5 sind dabei gleich aufgebaut. Die beiden Stelleinrichtungen 4, 5 werden mittels einer Steuereinheit 6 angesteuert, wobei jede Stelleinrichtung einen eigenen Antrieb 40, 50 vorzugsweise in Form eines Servomotors aufweist.

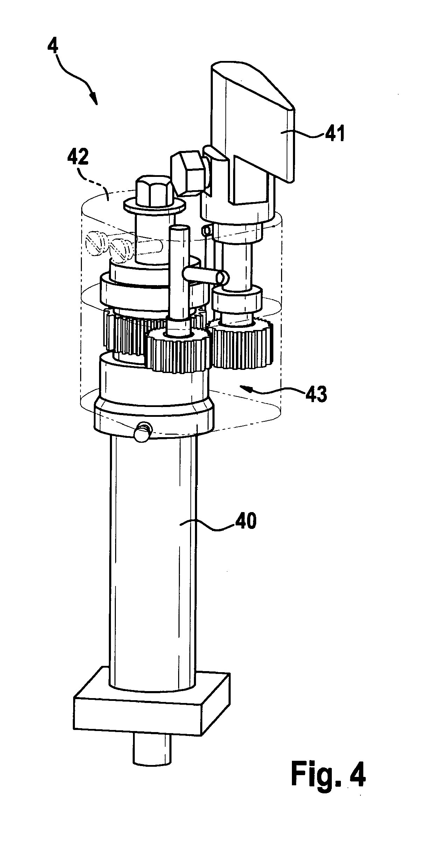

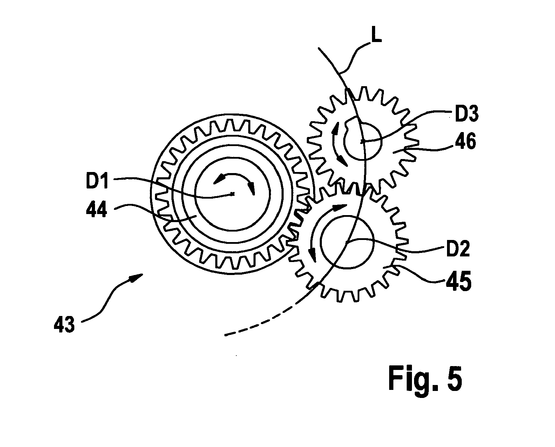

In Figur 4 ist schematisch die erste Stelleinrichtung 4 dargestellt. Neben dem Antrieb 40 umfasst die erste Stelleinrichtung 4 einen Hebel 41, ein Gehäuse 42 und ein Getriebe 43. Das Getriebe 43 umfasst, wie in Figur 5 gezeigt, ein erstes Zahnrad 44, ein zweites Zahnrad 45 und ein drittes Zahnrad 46. Das erste Zahnrad 44 dreht sich dabei um eine erste Drehachse D1. Das zweite Zahnrad 45 dreht sich um eine zweite Drehachse D2 und bewegt sich entlang einer Kreislinie L um das erste Zahnrad 44 herum. Das dritte Zahnrad 46 dreht sich um eine dritte Drehachse D3 und läuft gemeinsam mit dem zweiten Zahnrad 45 um das erste Zahnrad 44 um. Da das dritte Zahnrad 46 mit dem zweiten Zahnrad 45 kämmt, bewegt sich das dritte Zahnrad ebenfalls auf einer Kreislinie um das erste Zahnrad 44 herum. In diesem Ausführungsbeispiel bewegen sich das zweite und dritte Zahnrad auf der gleichen Kreislinie L. Es sei jedoch angemerkt, dass es hier auch andere Lösungen gibt, um die beiden Zahnräder auf verschiedenen Kreislinien um das erste Zahnrad 44 bewegt werden können. Die nicht im Detail dargestellte zweite Stelleinrichtung 5 umfasst in gleicher Weise einen Antrieb 50, einen Hebel 51, ein Gehäuse 52 und ein Getriebe mit drei Zahnrädern.

Ferner umfasst die Vorrichtung 1 eine Gutauslauf 7, welcher durch den zweiten Transportstern 3 bereitgestellt wird, sowie einen Schlechtauslauf 8, welcher am ersten Transportstern 2 vorgesehen ist. Am Übergang vom Einlauf zum Gutauslauf 7 bzw. Schlechtauslauf 8 ist ferner ein Keil 9 für einen jeweils sanften und gleichmäßigen Übergang vom Zulauf am ersten Transportstern 2 (Pfeil A) in den Gutauslauf 7 bzw. den Schlechtauslauf 8 vorgesehen. Das Bezugszeichen 10 bezeichnet eine Überwachungsvorrichtung, beispielsweise eine optische Überwachungsvorrichtung, welche Beschädigungen der Güter und/oder falsche Füllmengen erfasst. Die Überwachungsvorrichtung 10 ist mit der Steuerungseinheit 6 verbunden.

In dem in den Figuren 1 und 2 gezeigten Ausführungsbeispiel sind fehlerfreie Güter mit dem Bezugszeichen 11 bezeichnet und Ausschussgüter mit dem Bezugszeichen 12.

Erfindungsgemäß sind somit zwei Stelleinrichtungen 4, 5 vorgesehen, wobei die erste Stelleinrichtung 4 die fehlerfreien Güter 11 in den Gutauslauf 7 leitet und die zweite Stelleinrichtung 5 die Ausschussgüter 12 in den Schlechtauslauf 8 leitet. Die Entscheidung, ob ein zugeführtes Gut, in diesem Ausführungsbeispiel kleine Fläschchen für Medizinprodukte, gut oder schlecht ist, wird dabei durch die Überwachungsvorrichtung 10 bestimmt. Basierend auf dem von der Überwachungsvorrichtung 10 übermittelten Signal stellt die Steuereinheit 6 dabei die erste und zweite Stelleinrichtung. Die Position der Hebel 41, 51 wird dabei jeweils derart gewählt, dass ein fehlerfreies Gut 11 in den Gutauslauf 7 geleitet wird (erste Stellung in Figur 1) oder ein Ausschussgut 12 in den Schlechtauslauf 8 geleitet wird (zweite Stellung in Figur 2).

Um problemlos zeitgleich unterschiedliche Verfahrensgeschwindigkeiten ausführen zu können, weist jede der Stelleinrichtungen 4, 5 dabei einen eigenen Antrieb 40, 50 auf. Der Bewegungsablauf der Hebel 41, 51 wird dabei durch das Getriebe 43 bestimmt. Grundsätzlich werden die beiden Stelleinrichtungen 4, 5 zwischen zwei Extrempositionen (Hebel eingezogen oder Hebel ausgefahren) bewegt, wobei die Position der beiden Stelleinrichtungen 4, 5 jeweils entgegengesetzt ist (siehe Figuren 1 und 2). Dabei werden die Positionen der Stelleinrichtungen 4, 5 jeweils solange beibehalten, bis ein Gut folgt, welches in den anderen Auslauf ausgewiesen werden soll.

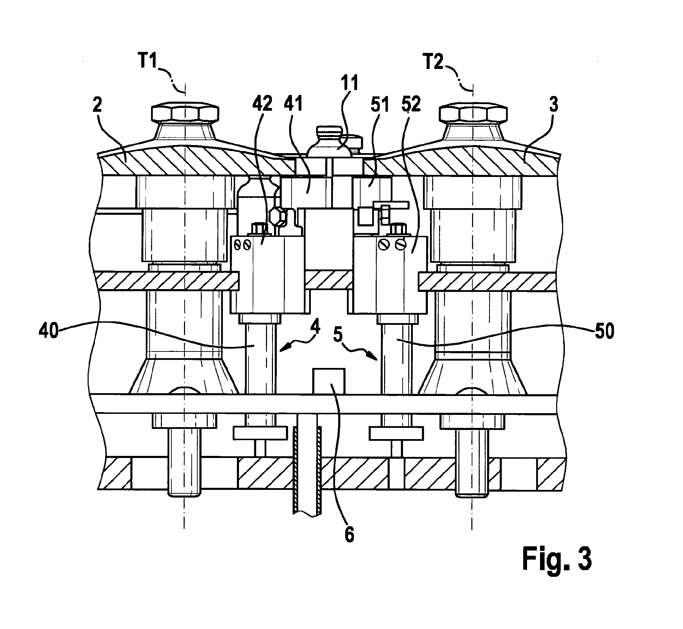

Wie insbesondere aus Figur 3 ersichtlich ist, sind die beiden Stelleinrichtungen 4, 5 unterhalb der Transportsterne 2, 3 angeordnet. Falls eine Teilung T der Transportsterne für ein zu beförderndes Gut nicht mehr geeignet ist, können die Transportsterne ausgetauscht werden. Falls dabei die Stelleinrichtungen 4, 5 nicht mehr für die neue Teilung geeignet sind, können diese ebenfalls ausgetauscht werden, wobei lediglich das Gehäuse 52, 42 mit dem Getriebe und dem Hebel ausgetauscht werden muss. Wie insbesondere in Figur 4 gezeigt, kann auch lediglich der Hebel 41, 51 ausgetauscht werden, um gegebenenfalls gegen einen kürzeren oder längeren Hebel ausgetauscht zu werden. Wie weiter aus Figur 4 ersichtlich ist, sind die Hebel 41, 51 mit sich in Transportrichtung verjüngenden Enden ausgebildet, was einen sanften Übergang der Behältnisse in einen der Ausläufe sicherstellt.

Somit kann erfindungsgemäß eine Vorrichtung zum Ausscheiden von Ausschussgütern 12 bereitgestellt werden, welche in kontinuierlicher Weise Güter in fehlerfreie und fehlerbehaftete Güter unterscheiden kann und in einen entsprechenden Auslauf umleiten kann. Hierbei muss eine Rotationsgeschwindigkeit der Transportsterne 2, 3 nicht reduziert werden, sondern es kann eine kontinuierliche Förderung erfolgen. Dabei ist die erfindungsgemäße Vorrichtung sehr ausfallsicher und weist insbesondere einen sehr kompakten Aufbau auf. Dies wird insbesondere in Figur 3 deutlich, wo ersichtlich ist, dass die Stelleinrichtungen 4, 5 unterhalb der Transportsterne 2, 3 und insbesondere in einem Bereich zwischen den Drehachsen T1, T2 der Transportsterne 2, 3 angeordnet sind. Somit wird erfindungsgemäß für die Stelleinrichtung 4, 5 kein zusätzlicher Platzbedarf benötigt.

## Patentansprüche

1. Vorrichtung zum Ausscheiden von Ausschussgütern (12), umfassend:
- einen ersten Transportstern (2),
- einen zweiten Transportstern (3),
- einen Gutauslauf (7) und einen Schlechtauslauf (8),
- eine erste Stelleinrichtung (4), welche am ersten Transportstern (2) angeordnet ist,
- eine zweite Stelleinrichtung (5), welche am zweiten Transportstern (3) angeordnet ist,
- eine Steuereinheit (6), welche die erste und zweite Stelleinrichtung (4, 5) steuert, und
- eine Überwachungsvorrichtung (10), welche die zugeführten Güter überwacht, um Ausschussgüter (12) zu identifizieren, wobei die Überwachungsvorrichtung mit der Steuereinheit (6) verbunden ist, und
- wobei die Steuereinheit (6) eingerichtet ist, die erste und zweite Stelleinrichtung (4, 5), basierend auf einem Ergebnis der Überwachungsvorrichtung (10) zu stellen, um Ausschussgüter (12) in den Schlechtauslauf (8) zu leiten und um fehlerfreie Güter in den Gutauslauf (7) zu leiten.

2. Vorrichtung nach Anspruch 1, **dadurch gekennzeichnet, dass** jede der Stelleinrichtungen (4, 5) einen Hebel (41, 51) umfasst, wobei der Hebel eine Bewegung auf einer Kreisbahn (L) und eine Drehung um eine Drehachse (D3) ausführt.

3. Vorrichtung nach einem der vorhergehenden Ansprüche, **dadurch gekennzeichnet, dass** die erste und zweite Stelleinrichtung (4, 5) jeweils ein Getriebe (43) aufweist.

4. Vorrichtung nach Anspruch 3, **dadurch gekennzeichnet, dass** das Getriebe ein mit dem Antrieb (40) verbundenes erstes Zahnrad (44), ein mit dem ersten Zahnrad (44) kämmendes zweites Zahnrad (45) und ein mit dem zweiten Zahnrad (45) kämmendes drittes Zahnrad (46) aufweist, wobei das zweite und dritte Zahnrad um das erste Zahnrad (44) umläuft.

5. Vorrichtung nach einem der vorhergehenden Ansprüche, ferner umfassend einen Keil (9), welcher den Gutauslauf (7) von Schlechtauslauf (8) trennt.

6. Vorrichtung nach einem der vorhergehenden Ansprüche, **dadurch gekennzeichnet, dass** die erste und zweite Stelleinrichtung (4, 5) jeweils einen eigenen Antrieb (40, 50) aufweisen.

7. Vorrichtung nach einem der vorhergehenden Ansprüche, **dadurch gekennzeichnet, dass** der erste Transportstern (2) und der zweite Transportstern (3) einen gleichen Durchmesser und/oder eine gleiche Teilung (T) aufweisen.

8. Vorrichtung nach einem der vorhergehenden Ansprüche, **dadurch gekennzeichnet, dass** die erste und zweite Stelleinrichtung (4, 5) jeweils eine eingenommene Position beibehalten, bis die Steuereinheit (6) bestimmt, dass ein zugeführtes Gut in einen anderen Auslauf ausgewiesen werden muss.

9. Vorrichtung nach einem der Ansprüche 2 bis 8, **dadurch gekennzeichnet, dass** der Hebel (41, 42) der Stelleinrichtung (4, 5) und/oder die gesamte Stelleinrichtung (4, 5) austauschbar ist.

10. Füllmaschine oder Verpackungsmaschine, insbesondere für pharmazeutische Güter, umfassend eine Vorrichtung nach einem der vorhergehenden Ansprüche.

## Claims

1. Apparatus for separating out reject products (12), comprising:
- a first star conveyor (2),
- a second star conveyor (3),
- an acceptable-product exit (7) and a defective-product exit (8),
- a first adjusting device (4), which is arranged on the first star conveyor (2),
- a second adjusting device (5), which is arranged on the second star conveyor (3),
- a control unit (6), which controls the first and second adjusting devices (4, 5), and
- a monitoring apparatus (10), which monitors the products supplied in order to identify reject products (12), wherein the monitoring apparatus is connected to the control unit (6), and
- wherein the control unit (6) is intended to adjust the first and second adjusting devices (4, 5), on the basis of a result from the monitoring apparatus (10), in order to direct reject products (12) into the defective-product exit (8) and to direct non-defective products into the acceptable-product exit (7).

2. Apparatus according to Claim 1, **characterized in that** each of the adjusting devices (4, 5) comprises a lever (41, 51), wherein the lever executes a movement over a circular path (L) and a rotation about an axis of rotation (D3).

3. Apparatus according to one of the preceding claims, **characterized in that** the first and second adjusting devices (4, 5) each have a gear mechanism (43).

4. Apparatus according to Claim 3, **characterized in that** the gear mechanism has a first gearwheel (44), which is connected to the drive (40), a second gearwheel (45), which meshes with the first gearwheel (44), and a third gearwheel (46), which meshes with the second gearwheel (45), wherein the second and third gearwheels circulate around the first gearwheel (44).

5. Apparatus according to one of the preceding claims, further comprising a wedge (9), which separates the acceptable-product exit (7) from the defective-product exit (8).

6. Apparatus according to one of the preceding claims, **characterized in that** the first and second adjusting devices (4, 5) each have a dedicated drive (40, 50).

7. Apparatus according to one of the preceding claims, **characterized in that** the first star conveyor (2) and the second star conveyor (3) have the same diameter and/or the same pitch (T).

8. Apparatus according to one of the preceding claims, **characterized in that** the first and second adjusting devices (4, 5) each maintain a specifically assumed position until the control unit (6) determines that a product supplied has to be expelled to a different exit.

9. Apparatus according to one of Claims 2 to 8, **characterized in that** it is possible to change over the lever (41, 42) of the adjusting device (4, 5) and/or the adjusting device (4, 5) as a whole.

10. Filling machine or packaging machine, in particular for pharmaceutical products, comprising an apparatus according to one of the preceding claims.

## Revendications

1. Dispositif destiné à la séparation de produits non conformes (12), comprenant:
- une première étoile de transport (2),
- une deuxième étoile de transport (3),
- une sortie de produits conformes (7) et une sortie de produits défectueux (8),
- un premier dispositif de réglage (4), qui est disposé sur la première étoile de transport (2),
- un deuxième dispositif de réglage (5), qui est disposé sur la deuxième étoile de transport (3),
- une unité de commande (6), qui commande le premier et le deuxième dispositifs de réglage (4, 5), et
- un dispositif de surveillance (10), qui surveille les produits fournis, afin d'identifier des produits non conformes (12), le dispositif de surveillance étant relié à l'unité de commande (6), et
- dans lequel l'unité de commande (6) est conçue de façon à régler le premier et le deuxième dispositifs de réglage (4, 5), sur la base d'un résultat du dispositif de surveillance (10), afin de guider les produits non conformes (12) dans la sortie de produits défectueux (8) et de guider les produits sans défauts dans la sortie de produits conformes (7).

2. Dispositif selon la revendication 1, **caractérisé en ce que** chacun des dispositifs de réglage (4, 5) comprend un levier (41, 51), dans lequel le levier accomplit un mouvement sur une trajectoire circulaire (L) et une rotation autour d'un axe de rotation (D3).

3. Dispositif selon l'une quelconque des revendications précédentes, **caractérisé en ce que** le premier et le deuxième dispositifs de réglage (4, 5) présentent respectivement une transmission (43).

4. Dispositif selon la revendication 3, **caractérisé en ce que** la transmission présente une première roue dentée (44) reliée à l'entraînement (40), une deuxième roue dentée (45) engrenant avec la première roue dentée (44) et une troisième roue dentée (46) engrenant avec la deuxième roue dentée (45), la deuxième et la troisième roues dentées (45, 46) tournant autour de la première roue dentée (44).

5. Dispositif selon l'une quelconque des revendications précédentes, comprenant en outre un coin (9), qui sépare la sortie de produits conformes (7) de la sortie de produits défectueux (8).

6. Dispositif selon l'une quelconque des revendications précédentes, **caractérisé en ce que** le premier et le deuxième dispositifs de réglage (4, 5) présentent chacun un entraînement propre (40, 50).

7. Dispositif selon l'une quelconque des revendications précédentes, **caractérisé en ce que** la première étoile de transport (2) et la deuxième étoile de transport (3) présentent un diamètre égal et/ou un pas égal (T).

8. Dispositif selon l'une quelconque des revendications précédentes, **caractérisé en ce que** le premier et le deuxième dispositifs de réglage (4, 5) conservent chacun une position occupée, jusqu'à ce que l'unité de commande (6) détermine qu'un produit fourni doit être aiguillé vers une autre sortie.

9. Dispositif selon l'une quelconque des revendications 2 à 8, **caractérisé en ce que** le levier (41, 42) du dispositif de réglage (4, 5) et/ou tout le dispositif de réglage (4, 5) est échangeable.

10. Machine de remplissage ou machine d'emballage, en particulier pour des produits pharmaceutiques, comprenant un dispositif selon l'une quelconque des revendications précédentes.
